# EUROPÄISCHE PATENTSCHRIFT

(11) **EP 1 494 444 B1**
(45) Veröffentlichungstag und Bekanntmachung des Hinweises auf die Patenterteilung: **06.08.2014**
(21) Anmeldenummer: 04102556.0
(22) Anmeldetag: 07.06.2004
(51) Int. Cl.: H04M 3/42

(54) **Verfahren und Modul zum Senden von Informationen bezüglich erreichbarer Endgeräte eines angerufenen Teilnehmers an den anrufenden Teilnehmer**
Method and module for sending information about reachable terminals belonging to a called party to a calling party
Procédé et système pour envoyer des informations vers un appelant sur les terminaux accessibles d'un appelé

(30) Priorität: 04.07.2003 DE 10330281
(43) Veröffentlichungstag der Anmeldung: 05.01.2005
(73) Patentinhaber: Unify GmbH & Co. KG, 81379 München (DE)
(72) Erfinder: Lederer, Thomas, 81379, München (DE)
(74) Vertreter: Fritzsche, Thomas

(56) Entgegenhaltungen:
- EP-A- 1 313 330
- DE-A- 10 147 770

## Beschreibung

Die Erfindung betrifft ein Verfahren zur Direktwahl von einem ersten Teilnehmer mit einem ersten Endgerät in einer Telefonanlage zu einem zweiten Teilnehmer mit mehreren Endgeräten, von denen mindestens eines außerhalb der Telefonanlage angeschlossen ist.

In vielen Telefonanlagen bieten die Telefonie-Endgeräte die Möglichkeit, den gewünschten Teilnehmer mit Hilfe von Direktwahltasten anzuwählen. Zu diesem Zweck bietet das Wahltastenfeld eine Reihe von Tasten an, die sich für die Verknüpfung mit einem bestimmten Teilnehmer konfigurieren lassen. Manchmal wird beim Anwählen einer solchen Direktwahlfunktion innerhalb einer privaten Telefonanlage angezeigt, wenn bei dem gewünschten Teilnehmer der Anschluss belegt ist. In solchen privaten Anlagen kann zudem eine LED neben jeder Direktwahltaste ständig die Information über den Besetztzustand des zugehörigen Teilnehmers anzeigen.

In der Praxis genügt eine einzige Direktwahltaste für jeden Teilnehmer jedoch zumeist nicht, da beinahe jeder Teilnehmer unter mehreren Anschlüssen zu erreichen ist, beispielsweise im Büro, privat oder mobil. Eine herkömmliche Lösung sieht deshalb vor, mehrere Direktwahltasten einem einzigen Teilnehmer zuzuordnen. Damit wird aber sowohl die Übersichtlichkeit auf dem Wahltastenfeld verringert als auch eine optimale Ausnutzung der vorhandenen Tasten für möglichst viele Teilnehmer verhindert. Daher werden auch oft mit Hilfe einer Umschalt-Taste zumindest zwei mögliche Rufnummern einer einzigen Taste zugewiesen. Schon im obigen einfachen Beispiel der Anschlüsse im Büro, privat oder mobil reichen die durch das Umschalten gegebenen zwei Wahlmöglichkeiten aber nicht aus.

Die Betätigung der Direktwahltaste führt häufig deshalb nicht zu einer Verbindung zu dem gewünschten Teilnehmer, weil der Anschluss besetzt ist oder der angewählte Teilnehmer unter dem gewählten Anschluss nicht verfügbar ist. Der Besetztzustand lässt sich bei herkömmlicher Technik höchstens dann an der LED ablesen, sofern sich der Anschluss des Teilnehmers in derselben privaten Telefonanlage befindet. Damit beschränkt sich diese Funktionalität aber auf einen begrenzten Kreis möglicher Teilnehmer und kann nicht über die Grenzen der privaten Telefonanlage hinaus genutzt werden.

Eine Verfügbarkeit des Teilnehmers lässt sich zudem in herkömmlichen Telefonanlagen nicht über Direktwahltasten abfragen, und über den Besetztzustand hinaus erfährt der Benutzer nichts über die Verfügbarkeit des gewünschten Teilnehmers. Zwar ist häufig zumindest intern innerhalb einer Firma ein Verfügbarkeitsdienst vorhanden. Er ist aber nicht über die Telefonanlage anzusprechen. Damit kann auf wichtige Zusatzinformationen über die Verfügbarkeit des Teilnehmers wie beispielsweise "in einer Besprechung", "im Urlaub", "vertreten durch ..." nicht per Direktwahltaste zugegriffen werden.

In DE 101 55 431 A1 ist ein Verfahren zum Übertragen einer Nachricht von einem ersten Teilnehmer-Endgerät über ein Kommunikationssystem an ein zweites Teilnehmer-Endgerät beschrieben, bei dem in dem Teilnehmer-Endgerät eine Bereitschaft eines jeweiligen Empfängers zum Empfang von Nachrichten festgelegt wird. In DE 101 47 770 A1 ist ein Verfahren beschrieben, bei dem Kommunikationsinformationen einer ersten Kommunikationseinheit über ein dieser zugeordnetes Kommunikationssystem bereitgestellt werden, wobei die Kommunikationsinformationen Angaben über Kommunikationsmöglichkeiten aufweisen, über die eine Kommunikationsverbindung mit der ersten Kommunikationseinheit herstellbar ist. In EP 1 313 330 A1 ist ein Verfahren beschrieben, bei dem eine Netzeinrichtung einen von einem Endgerät eines anrufenden Teilnehmers übermittelten Wunsch zur Herstellung einer Verbindung zu einem angerufenen Teilnehmer empfängt, die diesem angerufenen Teilnehmer zugeordneten Endgeräte ermittelt, mindestens eines der ermittelten Endgeräte auf aktuelle Erreichbarkeit prüft und anschließend eine Information an das Endgerät des anrufenden Teilnehmers über erreichbare dem angerufenen Teilnehmer zugeordnete Endgeräte sendet.

Aufgabe der Erfindung ist es daher, ein Verfahren und eine Vorrichtung anzugeben, die dem Benutzer einen raschen Überblick über die Verfügbarkeit gewünschter Teilnehmer im Zusammenhang mit einer Direktwahlfunktion zu verschaffen. Ergänzend soll ein Direktwahlverfahren angegeben werden, mit dem eine Verbindung zu dem gewünschten Teilnehmer in möglichst wenig Schritten aufgebaut wird.

Die erfindungsgemäße Lösung sieht vor, dem Benutzer an seinem Telefonie-Endgerät Verfügbarkeitsinformationen möglicher gewünschter Teilnehmer zur Verfügung zu stellen. Dafür greift sie auf einen ggf. anderweitig schon vorhandenen Verfügbarkeitsdienst zurück, den sie auch über die Grenzen privater Telefonanlagen hinweg abfragt. Dieser Überblick kann nach Auswahl eines bestimmten Teilnehmers durch eine Direktwahlfunktion, aber auch durch eine ständige Anzeige erfolgen.

Weiterhin ermöglicht es die Erfindung in einer relativ selbständigen Ausprägung, dem Benutzer zu jedem gewünschten Teilnehmer so einfach wie möglich eine Auswahl von Anschlüssen zu geben. Dazu können auch Anschlüsse gehören, unter denen der Teilnehmer nur mittelbar oder nur ein Stellvertreter erreichbar ist. Mit Hilfe der Verfügbarkeitsinformationen kann aus dieser Auswahlliste ein Verbindungsversuch zu einem Anschluss erfolgen, der eine entsprechend hohe Erfolgswahrscheinlichkeit hat.

Im Einzelnen ist die Erfindung in dem unabhängigen Verfahrensanspruch 1 und dem unabhängigen Vorrichtungsanspruch 11 sowie in ihren vorteilhaften Weiterbildungen in den abhängigen Unteransprüchen angegeben.

Danach ist ein Direktwahlverfahren von einem ersten Teilnehmer mit einem ersten Endgerät in einer Telefonanlage zu einem zweitem Teilnehmer mit mehreren Endgeräten, von denen mindestens eines außerhalb der Telefonanlage angeschlossen ist, vorgesehen, bei dem dem zweiten Teilnehmer eine Direktwahltaste spezifisch zugeordnet wird, wobei nach einem Betätigen der Direktwahltaste eine Liste der Endgeräte und Anschlüsse, die dem zweiten Teilnehmer zugeordnet sind, bereitgestellt wird, Verfügbarkeitsinformationen zu dem zweiten Teilnehmer ständig und unabhängig von der Betätigung der Direktwahltaste von einem Verfügbarkeitsdienst abgefragt werden, der außerhalb der Telefonanlage angeschlossen ist, Teile der Verfügbarkeitsinformationen dem ersten Teilnehmer an dem ersten Endgerät ständig zugänglich gemacht werden, die Verfügbarkeitsinformationen dahingehend klassifiziert werden, ob der zweite Teilnehmer verfügbar ist oder nicht, und das Ergebnis der Klassifikation durch eine der Direktwahltaste spezifisch zugeordnete binäre Darstellung vor Betätigung der Direktruftaste angezeigt wird, die Direktwahl mittels der Direktwahltaste ausgeführt wird, und die Verfügbarkeitsinformation derart ausgewertet wird, dass ein bevorzugter Anschluss aus der Liste ermittelt wird, über den der zweite Teilnehmer mit höchster Wahrscheinlichkeit bei Anwahl des Anschlusses erreichbar ist. In einer Weiterbildung sieht das erfindungsgemäße Verfahrens vor, dass nach dem Auslösen einer Direktwahlfunktion eine Liste der Endgeräte und Anschlüsse angezeigt wird, die dem gewünschten Teilnehmer zugeordnet sind, und der bevorzugte Anschluss dem ersten Teilnehmer vorgeschlagen wird.

Ferner ist ein Modul für ein erstes Endgerät eines ersten Teilnehmers in einer internen Telefonanlage mit einer Auslöseeinrichtung für ein Direktwahlverfahren und mit einer Ausgabeeinheit für Verfügbarkeitsinformationen vorgesehen, wobei das Modul an eine Informationsquelle für eine Liste der einer Direktwahl für den zweiten Teilnehmer zugeordneten Anschlussdaten angeschlossen ist und darauf ausgelegt ist, diese Daten nach einem Betätigen einer dem zweiten Teilnehmer zugeordneten Direktwahltaste bereitzustellen, das Modul an einem Verfügbarkeitsdienst außerhalb der Telefonanlage angeschlossen ist, um Verfügbarkeitsinformationen zu einem zweiten Teilnehmer ständig und unabhängig von der Betätigung der Direktwahltaste abzufragen, und mit der Ausgabeeinheit des Endgerätes verbunden ist, um diese Verfügbarkeitsinformationen zumindest teilweise über die Ausgabeeinheit ständig darzustellen, das Direktwahlverfahren mittels der dem zweiten Teilnehmer spezifisch zugeordneten Direktwahltaste ausgeführt wird, das Modul eine Klassifikationseinheit zur Klassifikation der Verfügbarkeitsinformationen dahingehend, ob der zweite Teilnehmer verfügbar ist oder nicht, aufweist, das Modul zur Anzeige des Ergebnisses der Klassifikation durch eine der Direktwahltaste spezifisch zugeordnete binäre Darstellung vor Betätigung der Direktruftaste ausgestaltet ist, und
dem Modul an eine Einrichtung zur automatischen Anschlusswahl angeschlossen ist, die ausgestaltet ist um die Verfügbarkeitsinformation derart auszuwerten, dass ein bevorzugter Anschluss aus der Liste ermittelbar ist, über den der zweite Teilnehmer mit höchster Wahrscheinlichkeit bei Anwahl des Anschlusses erreichbar ist.

In Weiterbildung des erfindungsgemäßen Verfahrens ist vorgesehen, dass nach Auswertung der Verfügbarkeitsinformationen ein Verbindungsaufbau zu einem aus der Liste ausgewählten Anschluss ausgeführt wird. Damit ist gewährleistet, dass die Daten zu möglichen Anschlüssen des gewünschten Teilnehmers vorhanden sind und bei der Auswahl eines dieser Anschlüsse die momentane Verfügbarkeit berücksichtigt wird. Somit wird versucht, eine Verbindung gerade zu dem Anschluss zu versuchen, unter dem der gewünschte Teilnehmer gemäß dem Wissen über seine Verfügbarkeit am wahrscheinlichsten zu erreichen ist.

Vorteilhafterweise werden die Liste und/oder die Verfügbarkeitsinformationen dem Benutzer auf einem Display oder per automatischer Sprachausgabe zugänglich gemacht. Der Benutzer hat damit einen Zugriff auf die benötigten Informationen, der seinen Bedürfnissen entspricht, je nachdem ob er die Informationen mit einem raschen Blick erfassen möchte oder sie hören möchte, wenn er ein Display wegen persönlicher oder äußerer Umstände nicht sehen kann.

Die Auswahl des gewünschten Teilnehmers aus der Liste erfolgt bevorzugt von dem Benutzer über Tasten, Sprache oder einen Multifrequenz-Wahlton. Die Wahl durch den Benutzer ermöglicht, auch komplexere Verfügbarkeitsinformationen oder besondere Präferenzen des Benutzers zu berücksichtigen. Die verschiedenen Eingabemöglichkeiten können einerseits erwünscht sein, damit das Ein- und Ausgabemedium einander entsprechen, andererseits je nach Situation die schnellste oder komfortabelste Eingabemöglichkeit darstellen.

Besonders bevorzugt erfolgt die Auswahl des gewünschten Teilnehmers aus der Liste durch eine Applikation automatisch. In diesem Fall löst der Benutzer lediglich die Direktwahlfunktion aus und es wird ohne weitere Handlung ein Verbindungsversuch unternommen, der auch die Verfügbarkeitsinformationen berücksichtigt.

Vorteilhafterweise ist die dem gewünschten Teilnehmer per Direktwahlfunktion zuzuordnende Liste von dem Benutzer oder dem gewünschten Teilnehmer konfigurierbar. Damit können genau die Anschlüsse in die Liste aufgenommen werden, welche die Beteiligten wünschen. Alternativ und ergänzend ist die dem gewünschten Teilnehmer zuzuordnende Liste bevorzugt einem elektronischen Adressbuch entnommen. In diesem Falle müssen die Beteiligten nicht notwendig eine Konfiguration vornehmen, und die Aktualität der Liste kann nicht hinter derjenigen des elektronischen Verzeichnisses zurückfallen.

Erfindungsgemäß werden zumindest Teile der Verfügbarkeitsinformationen ständig abgefragt bzw. durch Notifizierungsmechanismen (z.B. Subscribe/Notify) ständig aktuell gehalten und dem Benutzer ständig zugänglich gemacht. Somit bedarf es keinerlei Handlung des Benutzers, um sich einen Überblick über die Verfügbarkeit der potentiellen Gesprächspartner zu verschaffen, die ihm wichtig sind und denen er deshalb eine Direktwahlfunktion zugeordnet hat.

Erfindungsgemäß ist vorgesehen, dass die Verfügbarkeitsinformation klassifiziert und das Ergebnis dem Benutzer über eine binäre Darstellung zugänglich gemacht wird. Eine derart einfache Information kann der Benutzer rasch erfassen, ohne die gesamte Verfügbarkeitsinformation auswerten zu müssen. Außerdem lässt sich diese vereinfachte Information leicht für viele potentielle Teilnehmer gleichzeitig darstellen.

Als Weiterbildung des erfindungsgemäßen Moduls ist vorgesehen, das Modul wenigstens mittelbar an ein Display oder einen Lautsprecher der Ausgabeeinheit anzuschließen, um die Verfügbarkeitsinformationen anzuzeigen bzw. per Sprachausgabe auszugeben. Damit hat das Modul die Möglichkeit, die Informationen dem Benutzer in der gewünschten Form zur Verfügung zu stellen.

Vorteilhafterweise weist das Modul einen Speicher für die Liste der Endgeräte und Anschlüsse mindestens eines möglichen zweiten Teilnehmers auf. In diesem Speicher kann die durch den Benutzer vorkonfiguriert Liste gespeichert und auch die vom Benutzer vorgegebenen Auswahlkriterien bei automatischer Auswahl festgehalten werden. Zusätzlich oder alternativ ist das Modul bevorzugt an ein elektronisches Adressbuch angeschlossen, um die Liste der Endgeräte und Anschlüsse des zweiten Teilnehmers abzufragen. Dadurch hat das Modul auch Zugriff auf aktuelle und umfassende Adressdaten, die nicht in dem Endgerät selbst hinterlegt sind.

Weiterhin ist das Modul bevorzugt an eine Auswahleinrichtung für die Auswahl des Anschlusses aus der Liste angeschlossen. Damit kann der Benutzer das Modul rasch zu einem Verbindungsaufbau mit demjenigen Anschluss veranlassen, den er für den geeignetsten hält. Dabei ist das Modul vorteilhafterweise wenigstens mittelbar an eine Tastatur, ein Mikrophon für Spracheingabe oder einen Multifrequenz-Wahltongenerator der Auswahleinrichtung angeschlossen ist. Dadurch steht dem Benutzer eine geeignete Eingabeschnittstelle zu dem Modul zur Verfügung.

Erfindungsgemäß weist das Modul eine Klassifikationseinheit für die Verfügbarkeitsinformationen auf. Damit kann die Verfügbarkeitsinformation auf eine wesentliche Information reduziert werden, die der Benutzer leicht und rasch aufnehmen kann.

Erfindungsgemäß ist das Modul an eine Einrichtung für die automatische Auswahl des Anschlusses aus der Liste angeschlossen ist. Diese Einrichtung ermöglicht unter Berücksichtigung der Verfügbarkeitsinformation eine komfortable Auswahl des Anschlusses, unter dem der gewünschte Teilnehmer mit größter Wahrscheinlichkeit erreichbar ist, ohne jeglichen Aufwand des Benutzers.

Vorteilhafterweise ist die Einrichtung zur automatischen Auswahl in das Modul integriert. Damit ist eine für die Funktion des Moduls vorteilhafte Einrichtung sein Bestandteil, was eine größere Vollständigkeit des Moduls und größere Übersichtlichkeit des Telefonie-Endgerätes zur Folge hat.

Die Erfindung wird nachfolgend auch in Hinsicht auf weitere Vorteile und Merkmale beispielhaft und unter Bezugnahme auf die beiliegenden Zeichnungen beschrieben. Die Zeichnungen zeigen in:
Fig. 1 eine Blockdarstellung einer Telefonanlage mit einem Telefonie-Endgerät für das erfindungsgemäße Direktwahlverfahren,
Fig. 2 das Auswahltastenfeld und Display des Telefonie-Endgerätes gemäß Fig. 1,
Fig. 3 eine schematische Darstellung der Einbindung des Telefonie-Endgerätes in eine Telefonanlage,
Fig. 4 ein Ablaufdiagramm eines Verbindungsaufbaus gemäß einer ersten Ausführungsform der Erdfindung und
Fig. 5 ein Ablaufdiagramm eines Verbindungsaufbaus gemäß einer zweiten Ausführungsform der Erfindung.

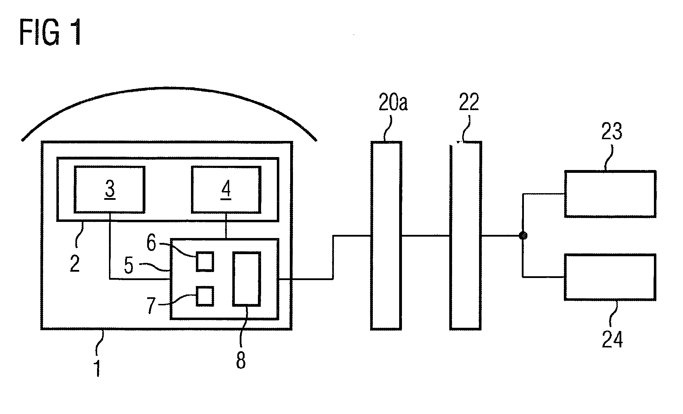

Wie in Fig. 1 erläutert, weist ein Telefonie-Endgerät 1 für das erfindungsgemäße Direktwahlverfahren ein Bedien- und Anzeigefeld 2 auf, in dem eine Auswahleinrichtung 3 und eine Ausgabeeinheit 4 angeordnet sind. Ein Modul 5 in dem Telefonie-Endgerät 1 ist an die Auswahleinrichtung 3 und die Ausgabeeinheit 4 angeschlossen. Dieses Modul 5 umfasst einen Adressspeicher 6, eine Klassifizierungseinheit 7 sowie einer Einrichtung zur automatischen Anschlussauswahl 8, mit denen es jeweils verbunden ist.

Das Telefonie-Endgerät 1 ist über das Modul 5 an eine Telefonanlage 20a angeschlossen, die ihrerseits über eine gemeinsame Applikationsplattform 22 mit einer Direktwahlapplikation 23 und einem Verfügbarkeitsdienst 24 verbunden ist.

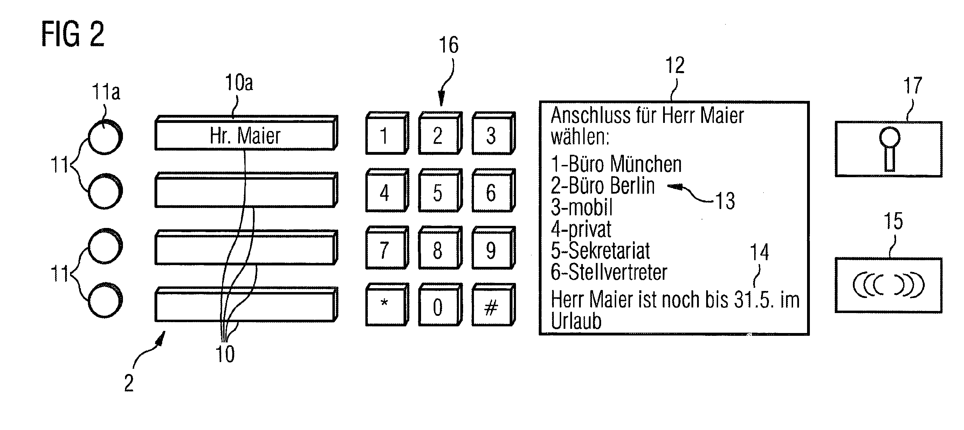

Das Bedien- und Anzeigefeld 2 des Telefonie-Endgerät 1 weist, wie Fig. 2 zeigt, eine Vielzahl von Direktwahltasten 10 auf, die jeweils einem Teilnehmer zugeordnet sind. Jeder Direktwahltaste 10 ist zudem eine LED 11 zugeordnet, die neben der zugehörigen Direktwahltaste 10 angeordnet ist. Der Zustand der LEDs 11 entspricht in einer unten näher erklärten Weise der Verfügbarkeit des Teilnehmers der zugehörigen Direktwahltaste 10.

Auf einem Display 12 wird nach Betätigung einer Direktwahltaste, in der Fig. 1 beispielhaft der Direktwahltaste 10a, eine Auswahlliste 13 der möglichen Anschlüsse des der Direktwahltaste 10a zugeordneten Teilnehmers sowie seine Verfügbarkeitsinformation 14 dargestellt. Diese als Text auf dem Display 12 dargestellten Informationen 13, 14 können alternativ oder zusätzlich auch mit Hilfe einer automatischen Sprachausgabe über einen Lautsprecher 15 ausgegeben werden. Ein Tastenblock 16 und ein Mikrophon 17 dienen der Eingabe von weiteren Benutzeranweisungen. Statt der am Telefonie-Endgerät 1 montierten Lautsprecher 15 und Mikrophon 17 finden alternativ auch Lautsprecher und Mikrophon des nicht dargestellten Hörers des Telefonie-Endgerätes 1 Verwendung.

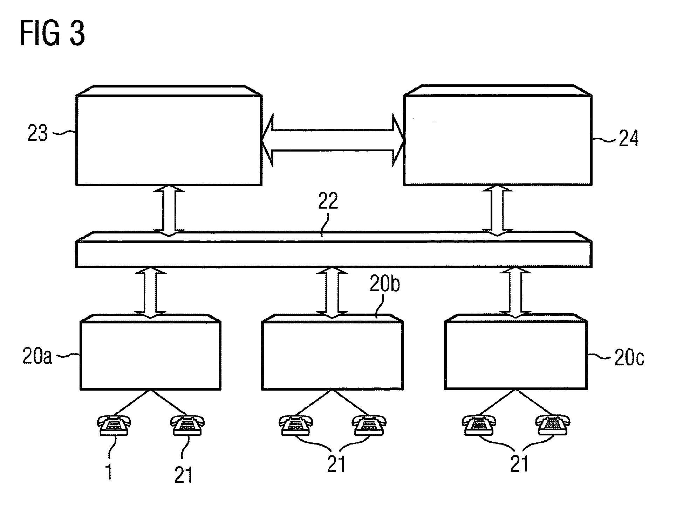

In Fig. 3 ist die Einbindung des Telefonie-Endgerätes 1 in eine Telefonanlage genauer dargestellt. Das Telefonie-Endgerät 1 ist an eine Telefonanlage 20a angeschlossen. Eine Vielzahl weiterer Telefonie-Endgeräte 21 ist zum Teil an dieselbe Telefonanlage 20a und zum Teil an weitere Telefonanlagen 20b, 20c angeschlossen. Alle Telefonanlagen 20a-20c sind an eine gemeinsame Applikationsplattform 22 angeschlossen.

Die Applikationsplattform 22 dient zur Integration der Telefonanlagen 20a-20c untereinander und mit Netzwerkprotokollen.

Die Applikationsplattform 22 ist insbesondere mit einer Direktwahlapplikation 23 verbunden, die eine Anfrage eines gewünschten Teilnehmers mit einer Auswahlliste 13 seiner möglichen Anschlüsse beantwortet, und einem Verfügbarkeitsdienst 24, der Verfügbarkeitsinformationen 14 des gewünschten Teilnehmers bereitstellt. Dabei kann die Direktwahlapplikation 23, etwa mittels LDAP, auf ein Adressbuch zurückgreifen, beispielsweise ein firmeninternes oder ein allgemeines Telefonbuch. Der Verfügbarkeitsdienst 24 wird in der Praxis häufig zugleich als System zur Speicherung der Anwesenheitszeiten genutzt.

Die Verfügbarkeitsinformation 14 des Verfügbarkeitsdienstes 24 wird zum einen nach Betätigung einer Direktwahltaste 10 im Display 12 des Telefonie-Endgerätes 1 dargestellt. Darüber hinaus kann das Modul 5 den Verfügbarkeitsdienst 24 ständig und unabhängig von der Betätigung der Direktwahltasten 10 abfragen. Die Verfügbarkeitsinformation 14 des jeder Direktwahltaste 10 zugeordneten Teilnehmers wird von der Klassifizierungseinheit 7 in dem Modul 5 in zwei Gruppen klassifiziert, von denen die eine "verfügbar" und die andere "nicht verfügbar" ist, und entsprechend der erkannten Klasse wird die zugehörige LED 11 von dem Modul 5 ein- oder ausgeschaltet.

Dabei ist die Klassendefinition für "verfügbar" in der Klassifizierungseinheit 7 frei konfigurierbar, um der LED eine wählbare Semantik zu geben, eine beispielhafte Möglichkeit wäre "verfügbar" heißt, der Teilnehmer ist anwesend, oder alternativ der Teilnehmer ist nicht im Urlaub, oder alternativ der Teilnehmer ist online, oder alternativ der Teilnehmer hat seine Verfügbarkeit so eingestellt, dass er gerade Anrufe entgegennehmen möchte. Die Klassendefinition für "nicht ver fügbar" ist ebenfalls konfigurierbar, bevorzugt aber jeweils über das Komplement festgelegt.

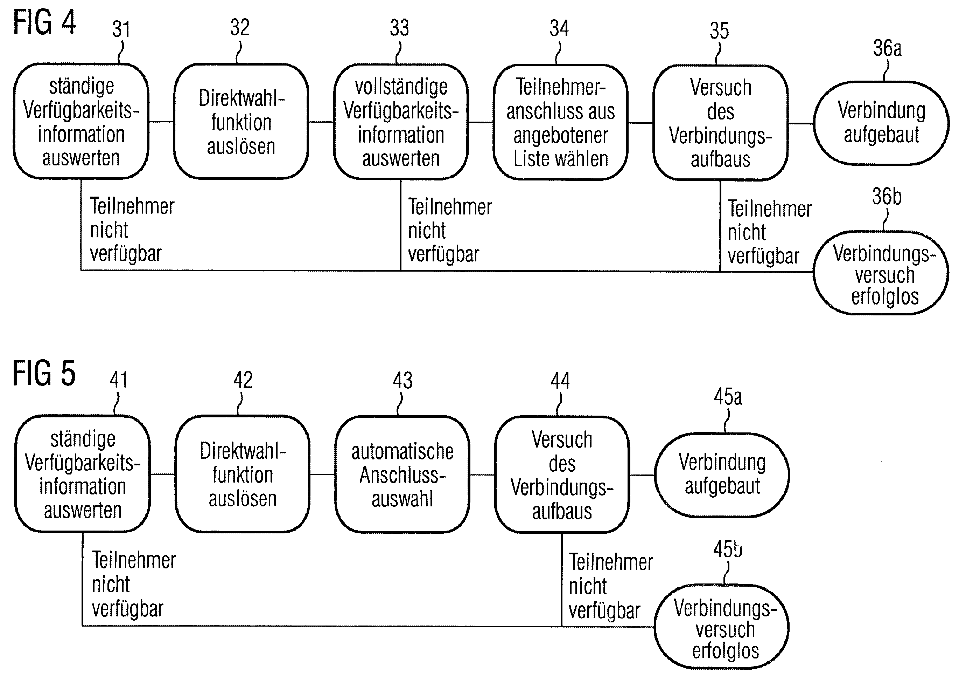

Anhand des schematischen Ablaufdiagramms in Fig. 4 und unter Bezug auf das in den Figuren 1 und 2 dargestellte Telefonie-Endgerät 1 wird im folgenden das Direktwahlverfahren gemäß einem illustrativen Beispiel im Einzelnen erläutert.

Der Benutzer überprüft (Schritt 31) mit Hilfe der entsprechenden LED 11, ob der gewünschte Teilnehmer verfügbar ist. In dem in Fig. 1 dargestellten Beispielfall ist die LED 11a maßgeblich, weil sie dem gewünschten Teilnehmer zugeordnet ist. Zeigt die LED 11a an, dass der gewünschte Teilnehmer nicht verfügbar ist, wird der Benutzer möglicherweise gar keinen Verbindungsversuch unternehmen. Ist der gewünschte Teilnehmer laut LED 11a verfügbar, so betätigt der Benutzer die dem Teilnehmer zugeordnete Direktwahltaste 10a (Schritt 32).

Das Bedien- und Eingabefeld 2 des Telefonie-Endgerätes 1 befindet sich nach dem Betätigen der Direktwahltaste 10a genau in dem in Fig. 2 dargestellten Zustand. Im Display 12 wird zunächst eine Auswahlliste 13 von möglichen Anschlüssen des über die Direktwahltaste ausgewählten Teilnehmers dargestellt. Diese Informationen können zu einem früheren Zeitpunkt vorkonfiguriert und aus dem Speicher 6 abgerufen oder unmittelbar von der Direktwahlapplikation 23 bereitgestellt sein (z.B. über eine LDAP-Abfrage).

Zusätzlich zu der Auswahlliste 13 stellt das Telefonie-Endgerät 1 im Display 12 Verfügbarkeitsinformationen 14 des gewünschten Teilnehmers dar. Die Verfügbarkeitsinformationen 14 werden von dem Verfügbarkeitsdienst 24 bereitgestellt und von dem Modul 5 über die gemeinsame Applikationsplattform 22 abgefragt. Der Benutzer wertet die Verfügbarkeitsinformationen 14 aus und stellt eventuell fest, dass kein Verbindungsversuch unternommen werden soll, beispielsweise weil einer der Anschlüsse des gewünschten Teilnehmers besetzt oder dieser im Urlaub ist (Schritt 33).

Unter Berücksichtigung der Verfügbarkeitsinformation 14 wählt der Benutzer einen der in der Liste 13 angebotenen Anschlüsse des gewünschten Teilnehmers aus. Dies geschieht am einfachsten durch Druck auf eine Auswahltaste 16, kann aber alternativ auch durch Spracherkennung oder einen Multifrequenzton mit Hilfe eines Mikrophons 17 erfolgen. Der ausgewählte Anschluss kann auch ein Stellvertreter wie etwa das Sekretariat, die Vermittlung, der Vorgesetzte oder Familienmitglieder sein (Schritt 34).

Das Modul 5 versucht nun, die Verbindung herzustellen (Schritt 35). Im Erfolgsfall entsteht die Verbindung (Schritt 36a). Der Verbindungsversuch kann aber auch scheitern (Schritt 36b), beispielsweise weil der Teilnehmer kurzfristig abwesend ist oder weil er die Informationen für den Verfügbarkeitsdienst 24 nicht gepflegt hat.

Jedenfalls hat der Benutzer durch nur zwei Aktionen, nämlich Betätigung der Direktwahltaste 10a und Auswahl eines der angebotenen Anschlüsse, einen Verbindungsversuch zu dem Teilnehmer unternommen, der aufgrund der LED 11 und der Verfügbarkeitsinformation 14 eine hohe Erfolgswahrscheinlichkeit hat.

In Fig. 5 ist eine zweite Ausführungsform des erfindungsgemäßen Direktwahlverfahrens dargestellt. Dabei wertet der Benutzer zunächst wie bei der ersten Ausführungsform die ständige Verfügbarkeitsinformation 14 über die LEDs 11 aus und bricht den Verbindungsversuch möglicherweise sofort von sich aus ab (Schritt 41). Ansonsten betätigt er die Direktwahltaste 10a (Schritt 42).

Im Gegensatz zur ersten Ausführungsform wird zwar von dem Modul 5 eine Auswahlliste 13 aus dem Speicher 6 gelesen oder von der Direktwahlapplikation 23 abgefragt sowie die Verfügbarkeitsinformation 14 bei dem Verfügbarkeitsdienst 24 abgefragt, nicht aber auf der Ausgabeeinheit 4 ausgegeben (Schritt 43).

Stattdessen wertet die Einrichtung zur automatischen Anschlusswahl 8 im Modul 5 die Verfügbarkeitsinformation 14 aus, und das Modul 5 versucht einen Verbindungsaufbau zu dem in der Einrichtung zur automatischen Anschlusswahl 8 ermittelten Anschluss, der den gewünschten Teilnehmer mit höchster Wahrscheinlichkeit erreicht (Schritt 44) und der dann entweder zu einer Verbindung führt (Schritt 45a) oder der erfolglos bleibt (Schritt 45b).

Die Einrichtung zur automatischen Anschlusswahl 8 kann explizite Anweisungen befolgen, die der gewünschte Teilnehmer im Verfügbarkeitsdienst 24 hinterlegt hat und die das Modul 5 dort abfragt, oder die der Benutzer konfiguriert und in dem Adressspeicher 6 gespeichert hat, wobei die Anweisungen insbesondere eine feste Prioritätenliste sein können.

Das Auswertungsverfahren in der Einrichtung zur automatischen Anschlusswahl 8 kann aber auch ein beliebig anderes sein. Weitere Beispiele fixer Auswertungsverfahren könnten die kostengünstigste Verbindung (etwa mobil zuletzt), eine Abhängigkeit von der Tageszeit (morgens und abends privat, sonst Büro), ein Verweigern bestimmter Verbindungen (auf mobil, während der Teilnehmer in einer Besprechung ist) oder auch ein adaptives Verfahren sein, das sein Verhalten lernend an den bisher erfolgreich geöffneten Verbindungen ausrichtet.

Alternativ kann die Einrichtung zur automatischen Anschlusswahl 8 statt dem Modul 5 auch der Direktwahlapplikation 23 zugeordnet sein. In diesem Fall empfängt die Direktwahlapplikation die Anforderung einer Direktwahl von dem Modul 5. Das Modul 5 sendet dann entweder auch die aus dem Speicher 6 ausgelesene Auswahlliste 13 an die Direktwahlapplikation 23, oder diese fragt sie bei einem elektronischen Adressbuch ab. Die Direktwahlapplikation 23 übermittelt die Liste 13 der Einrichtung zur automatischen Anschlusswahl 8 und erhält als Antwort die Anschlussdaten des gewählten Teilnehmers. Anschließend initiiert die Direktwahlapplikation 23 einen Verbindungsaufbau zwischen dem Endgerät 1 und diesem Teilnehmer.

Schließlich ist auch als zweite Ausführungsform eine Hybridlösung des illustrativen Beispiel und der ersten Ausführungsform denkbar, in der die Einrichtung zur automatischen Anschlusswahl 8 zwar wie in der ersten Ausführungsform beschrieben einen bevorzugten Anschluss ermittelt, das Modul 5 oder die Direktwahlapplikation 23 ihn aber nicht selbständig anwählt, sondern dem Benutzer zunächst nur vorschlägt. Dieser Vorschlag kann entweder als Abfrage einer einfachen Ja-Nein-Entscheidung erfolgen oder eine Hervorhebung eines Anschlusses in der Auswahlliste 13 gemäß dem illustrativen Beispiel sein, indem der Vorschlag zum Beispiel an erster Stelle auf dem Display 12 steht oder unterstrichen ist. Im letzteren Fall könnte die Auswahl des Benutzers für ein adaptives Verfahren gespeichert werden, um beim nächsten Mal die bisherigen Präferenzen in den Vorschlag einzubeziehen.

Eine Implementierung des vorgeschlagenen Verfahrens ist auch rein über Software unter Benutzung vorhandener Schnittstellen denkbar. So könnte die Funktion des Moduls 5 auf einem Server ablaufen, etwa im Zusammenhang mit der Direktwahlapplikation 23, und über z.B. eine CSTA-Schnittstelle an ein oder mehrere Kommunikationssysteme über Internetprotokoll angeschlossen sein, und es erlauben, Display 12, LEDs 11 sowie Tasten 16 und auch Anrufe zu steuern. Endgeräte können so unverändert die neue Funktionalität nutzen, soweit das Kommunikationssystem die Steuerung über eine zentrale Schnittstelle zulässt.

Gegebenenfalls besitzt auch das Endgerät 1 direkt Schnittstellen, über die man Display 12, Tasten 16 und Rufe steuern kann.

Alle Ausführungsformen haben gemeinsam, dass dem Benutzer über die LEDs 11 und über das Display 12 auf einfache Weise Information über die Verfügbarkeit der gewünschten Teilnehmer zugänglich gemacht wird. Zugleich wird mit wenigen oder im Fall der ersten Ausführungsform sogar einer einzigen Aktion des Benutzers ein Verbindungsversuch zu demjenigen Teilnehmeranschluss unternommen, der den Wünschen des Benutzers und/oder des Teilnehmers entspricht und insbesondere mit höchster Wahrscheinlichkeit einen erfolgreichen Verbindungsaufbau zwischen Benutzer und Teilnehmer leistet.

Obwohl die Erfindung anhand von Ausführungsbeispielen mit fester Merkmalskombination beschrieben wird, umfasst sie doch auch die denkbaren weiteren vorteilhaften Kombinationen dieser Merkmale, wie sie durch die Unteransprüche angegeben sind.

## Patentansprüche

1. Verfahren zur Direktwahl von einem ersten Teilnehmer mit einem ersten Endgerät (1) in einer Telefonanlage (20a) zu einem zweitem Teilnehmer mit mehreren Endgeräten, von denen mindestens eines außerhalb der Telefonanlage (20a) angeschlossen ist, wobei
- dem zweiten Teilnehmer eine Direktwahltaste (10) zugeordnet wird, wobei nach einem Betätigen der Direktwahltaste (10) eine Liste (13) der Endgeräte und Anschlüsse, die dem zweiten Teilnehmer zugeordnet sind, bereitgestellt wird,
- Verfügbarkeitsinformationen (14) zu dem zweiten Teilnehmer ständig und unabhängig von der Betätigung der Direktwahltaste (10) von einem Verfügbarkeitsdienst (24) abgefragt werden, der außerhalb der Telefonanlage (20a) angeschlossen ist,
- Teile der Verfügbarkeitsinformationen (14) dem ersten Teilnehmer an dem ersten Endgerät (1) ständig zugänglich (11, 12, 15) gemacht werden,
- die Verfügbarkeitsinformationen (14) dahingehend klassifiziert werden, ob der zweite Teilnehmer verfügbar ist oder nicht, und das Ergebnis der Klassifikation durch eine der Direktwahltaste (10) zugeordnete binäre Darstellung (11) vor Betätigung der Direktruftaste (10) angezeigt wird,
- die Direktwahl mittels der Direktwahltaste (10) ausgeführt wird, und
- die Verfügbarkeitsinformation (14) derart ausgewertet wird, dass ein bevorzugter Anschluss aus der Liste (13) ermittelt wird, über den der zweite Teilnehmer mit höchster Wahrscheinlichkeit bei Anwahl des Anschlusses erreichbar ist (44).

2. Verfahren nach Anspruch 1,
**dadurch gekennzeichnet, dass**
nach dem Auslösen einer Direktwahlfunktion (10) die Liste (13) der Endgeräte und Anschlüsse angezeigt wird, die dem zweiten Teilnehmer zugeordnet sind, und der bevorzugte Anschluss dem ersten Teilnehmer vorgeschlagen wird.

3. Verfahren nach Anspruch 1 und 2,
**dadurch gekennzeichnet, dass**
nach Auswertung der Verfügbarkeitsinformationen (14) ein Verbindungsaufbau zu einem aus der Liste (13) ausgewählten Anschluss ausgeführt wird.

4. Verfahren nach einem der Ansprüche 2 oder 3,
**dadurch gekennzeichnet, dass**
die Liste (13) und/oder die Verfügbarkeitsinformationen (14) dem ersten Teilnehmer auf einem Display (12) oder per automatischer Sprachausgabe (15) zugänglich gemacht werden.

5. Verfahren nach einem der Ansprüche 2 bis 4,
**dadurch gekennzeichnet, dass**
eine Auswahl des zweiten Teilnehmers aus der Liste (13) durch den ersten Teilnehmer über Tasten (16), Sprache (17) oder einen Multifrequenz-Wahlton erfolgt.

6. Verfahren nach einem der Ansprüche 1 bis 4,
**dadurch gekennzeichnet, dass**
die Auswahl des zweiten Teilnehmers aus der Liste (13) durch eine Applikation (23) automatisch erfolgt.

7. Verfahren nach einem der Ansprüche 1 bis 4,
**dadurch gekennzeichnet, dass**
die Auswahl des zweiten Teilnehmers aus der Liste (13) automatisch erfolgt durch eine Einrichtung zur automatischen Anschlusswahl (8) in einem Modul (5), über das das erste Endgerät (1) an die Telefonanlage (20a) angeschlossen ist.

8. Verfahren nach einem der Ansprüche 1 bis 7,
**dadurch gekennzeichnet, dass**
die dem zweiten Teilnehmer per Direktwahlfunktion (10) zuzuordnende Liste (13) von dem ersten oder dem zweiten Teilnehmer konfigurierbar ist.

9. Verfahren nach einem der Ansprüche 1 bis 8,
**dadurch gekennzeichnet, dass**
die dem zweiten Teilnehmer per Direktwahlfunktion (10) zuzuordnende Liste (13) einem elektronischen Adressbuch (23) entnommen ist.

10. Verfahren nach einem der Ansprüche 1 bis 9,
**dadurch gekennzeichnet, dass**
eine kostengünstigste Verbindung, eine Abhängigkeit von der Tageszeit, ein Verweigern bestimmter Verbindungen oder ein adaptives Verfahren verwendet wird, dass sein Verhalten lernend an bisher erfolgreich geöffneten Verbindungen ausrichtet.

11. Modul (5) für ein erstes Endgerät (1) eines ersten Teilnehmers in einer Telefonanlage (20a) mit einer Auslöseeinrichtung (10) für ein Direktwahlverfahren nach einem der vorhergehenden Ansprüche und mit einer Ausgabeeinheit (4) für Verfügbarkeitsinformationen (14),
wobei
- das Modul (5) an eine Informationsquelle (6, 23) für eine Liste (13) der einer Direktwahl (10) für den zweiten Teilnehmer zugeordneten Anschlussdaten angeschlossen ist und darauf ausgelegt ist, diese Daten nach einem Betätigen einer dem zweiten Teilnehmer zugeordneten Direktwahltaste (10) bereitzustellen,
- das Modul (5) an einem Verfügbarkeitsdienst (24) außerhalb der Telefonanlage (20a) angeschlossen ist, um Verfügbarkeitsinformationen (14) zu einem zweiten Teilnehmer ständig und unabhängig von der Betätigung der Direktwahltaste (10) abzufragen, und mit der Ausgabeeinheit (4) des Endgerätes (1) verbunden ist, um diese Verfügbarkeitsinformationen (14) zumindest teilweise über die Ausgabeeinheit (4) ständig darzustellen,
- das Direktwahlverfahren mittels der dem zweiten Teilnehmer zugeordneten Direktwahltaste (10) ausgeführt wird,
- das Modul (5) eine Klassifikationseinheit (7) zur Klassifikation der Verfügbarkeitsinformationen (14) dahingehend, ob der zweite Teilnehmer verfügbar ist oder nicht, aufweist,
- das Modul (5) zur Anzeige des Ergebnisses der Klassifikation durch eine der Direktwahltaste zugeordnete binäre Darstellung (11) vor Betätigung der Direktruftaste(10) ausgestaltet ist, und
- dem Modul (5) an eine Einrichtung zur automatischen Anschlusswahl (8) angeschlossen ist, die ausgestaltet ist um die Verfügbarkeitsinformation (14) derart auszuwerten, dass ein bevorzugter Anschluss aus der Liste (13) ermittelbar ist, über den der zweite Teilnehmer mit höchster Wahrscheinlichkeit bei Anwahl des Anschlusses erreichbar ist (44).

12. Modul (5) nach Anspruch 11,
**dadurch gekennzeichnet, dass**
das Modul (5) darauf ausgelegt ist, die der Direktwahl (10) für den zweiten Teilnehmer zugeordneten Anschlussdaten über die Ausgabeeinheit (4) darzustellen und den bevorzugten Anschluss dem ersten Teilnehmer vorzuschlagen.

13. Modul (5) nach Anspruch 11 oder 12,
**dadurch gekennzeichnet, dass**
das Modul (5) wenigstens mittelbar an ein Display (12) oder einen Lautsprecher (15) der Ausgabeeinheit (4) angeschlossen ist, um Informationen (13, 14) anzuzeigen bzw. per Sprachausgabe auszugeben.

14. Modul (5) nach einem der Ansprüche 11 bis 13,
**gekennzeichnet durch**
einen Speicher (6) für die Liste (13) der Endgeräte und Anschlüsse mindestens eines möglichen zweiten Teilnehmers.

15. Modul (5) nach einem der Ansprüche 11 bis 14,
**dadurch gekennzeichnet, dass**
das Modul (5) an ein elektronisches Adressbuch (23) angeschlossen ist, um die Liste (13) der Endgeräte und Anschlüsse des zweiten Teilnehmers abzufragen.

16. Modul (5) nach einem der Ansprüche 11 bis 15,
**dadurch gekennzeichnet, dass**
das Modul (5) an eine Auswahleinrichtung (3) für die Auswahl des Anschlusses aus der Liste (13) angeschlossen ist.

17. Modul (5) nach Anspruch 16,
**dadurch gekennzeichnet, dass**
das Modul (5) wenigstens mittelbar an eine Tastatur (16), ein Mikrophon (17) für Spracheingabe oder einen Multifrequenz-Wahltongenerator (16, 17) der Auswahleinrichtung (3) angeschlossen ist.

18. Modul (5) nach einem der Ansprüche 11 bis 17,
**dadurch gekennzeichnet, dass**
das Modul (5) ausgestaltet ist einen Verbindungsaufbau zu dem in der Einrichtung zur automatischen Anschlusswahl (8) ermittelten Anschluss zu versuchen.

19. Modul (5) nach einem der Ansprüche 11 bis 17,
**dadurch gekennzeichnet, dass**
das Modul (5) ausgestaltet ist den bevorzugten Anschluss nicht selbständig anzuwählen, sondern dem ersten Teilnehmer vorzuschlagen.

20. Modul (5) nach Anspruch 19,
**dadurch gekennzeichnet, dass**
die Einrichtung zur automatischen Auswahl (8) in das Modul (5) integriert ist.

## Claims

1. Method for direct dialling from a first participant with a first terminal (1) in a telephone system (20a) to a participant with a plurality of terminals, of which at least one is connected outside the telephone system (20a) wherein
- a direct dialling button (10) is allocated to the second participant, wherein, after actuation of the direct dialling button (10) a list (13) of the terminals and connections which are allocated to the second participant is provided,
- availability information (14) regarding the second participant is constantly being requested, independently of the actuation of the direct dialling button (10), by an availability service (24), which is connected outside the telephone (20a),
- parts of the availability information (14) is constantly made available (11, 12, 15) to the first participant at the first terminal (1),
- the availability information (14) is classified in respect of whether the second participant is available or not, and the result of the classification is displayed by a binary display (11) allocated to the direct dialling button (10) before the actuation of the direct call button (10),
- direct dialling is carried out by means of the direct dialling button (10), and
- the availability information (14) is evaluated in such a way that a preferred connection is determined from the list (13), by means of which the second participant is reachable (44) with the highest degree of probability when the connection is dialled.

2. Method according to claim 1, **characterised in that**, after the actuation of a direct dialling function (10), the list (13) is displayed of terminals and connections which are allocated to the second participant, and the preferred connection is proposed to the first participant.

3. Method according to claim 1 and 2, **characterised in that**, after the evaluation of the availability information (14), a connection set-up is carried out to a connection selected from the list (13).

4. Method according to any one of claims 2 or 3, **characterised in that** the list (13) and/or the availability information (14) is made accessible to the first participant on a display (12) or by automatic speech output (15).

5. Method according to any one of claims 2 to 4, **characterised in that** a selection of the second participant from the list (13) by the first participant is made by means of buttons (16), speech (17), or a multi-frequency dial tone.

6. Method according to any one of claims 1 to 4, **characterised in that** the selection of the second participant from the list (13) is carried out automatically by an application (23).

7. Method according to any one of claims 1 to 4, **characterised in that** the selection of the second participant from the list (13) is carried out automatically by a device for automatic connection selection (8) in a module (5), by which the first terminal (1) is connected to the telephone system (20a).

8. Method according to any one of claims 1 to 7, **characterised in that** the list (13) to be allocated to the second participant by direct dial function (10) can be configured by the first or the second participant.

9. Method according to any one of claims 1 to 8, **characterised in that** the list (13) to be allocated to the second participant by direct dial function (10) is taken from an electronic address book (23).

10. Method according to any one of claims 1 to 9, **characterised in that** a most economical connection, a dependency on the time of day, a rejection of certain connections, or an adaptive method is used, which bases its behaviour on a learning principle derived from the connections successfully made previously.

11. Module (5) for a first terminal (1) of a first participant in a telephone system (20a) with an actuation device (10) for a direct dialling method according to one of the foregoing claims and with an output unit (4) for availability information (14), wherein
- the module (5) is connected to an information source (6, 23) for a list (13) of the connection data allocated to a direct dial (10) for the second participant, and is designed to provide this data after the actuation of a direct dialling button (10) allocated to the second participant,
- the module (5) is connected to an availability service (24) outside the telephone system (20a), in order to request availability information (14) to a second participant constantly and independently of the actuation of the direct dialling button (10), and is connected to the output unit (4) of the terminal (1), in order to display constantly this availability information (14) at least partially via the output unit (4),
- the direct dialling process is carried out by means of the direct dialling button (10) allocated to the second participant,
- the module (5) comprises a classification unit (7) for the classification of the availability information (14) in respect of whether the second participant is available or not,
- the module (5) is designed for the display of the result of the classification by a binary display (11) allocated to the direct dialling button before the actuation of the direct call button (10), and
- the module (5) is connected to a device for automatic connection dialling (8), which is designed to evaluate the availability information (14) in such a way that a preferred connection can be determined from the list (13), by means of which the second participant is reachable (44) with the highest degree of probability when the connection is dialled.

12. Module (5) according to claim 11,
**characterised in that**
the module (5) is designed to display the connection data allocated to the direct dial (10) for the second participant via the output unit (4) and to propose the preferred connection to the first participant.

13. Module (5) according to claim 11 or 12,
**characterised in that**
the module (5) is connected indirectly to a display (12) or a loudspeaker (15) of the output unit (4),in order to display information (13,14) or output it by speech output.

14. Module (5) according to any one of claims 11 to 13, **characterised by** a memory (6) for the list (13) of the terminals and connections of at least one possible second participant.

15. Module (5) according to any one of claims 11 to 14, **characterised in that** the module (5) is connected to an electronic address book (23) in order to request the list (13) of the terminals and connections of the second participant.

16. Module (5) according to any one of claims 11 to 15, **characterised in that** the module (5) is connected to a selection device (3) for the selection of the connection from the list (13).

17. Module (5) according to claim 16,
**characterised in that**
the module (5) is connected indirectly to a keyboard (16), a microphone (17) for speech input, or a multi-frequency dial tone generator (16, 17) of the selection device (3).

18. Module (5) according to any one of claims 11 to 17, **characterised in that** the module (5) is designed to attempt a connection set-up to the connection determined in the device for the automatic connection dial (8).

19. Module (5) according to any one of claims 11 to 17, **characterised in that** the module (5) is designed not to select the preferred connection independently, but to propose this to the first participant.

20. Module (5) according to claim 19,
**characterised in that** the device for automatic selection (8) is integrated in the module (5).

## Revendications

1. Procédé servant à la sélection direct d'un premier abonné avec un premier terminal (1) dans une installation téléphonique (20a) à connecter à un deuxième abonné avec plusieurs terminaux, au moins un desdits terminaux étant connecté en dehors de l'installation téléphonique (20a), sachant
- qu'une touche de sélection directe (10) est attribuée au deuxième abonné, sachant qu'une liste (13) des terminaux et des connexions, qui sont associés au deuxième abonné, est fournie, une fois la touche de sélection directe (10) activée,
- que des informations de disponibilité (14) relatives au deuxième abonné sont appelées en permanence et de manière indépendante de l'actionnement de la sélection directe (10) par un service de disponibilité (24), lequel est connecté en dehors de l'installation téléphonique (20a)
- que des parties des informations de disponibilité (14) sont rendues accessibles (11, 12, 15) en permanence au premier abonné au niveau du premier terminal (1),
- que les informations de disponibilité (14) sont classées pour savoir si le deuxième abonné est disponible ou pas, et que le résultat du classement est affiché par un système de représentation (11) binaire associé à la touche de sélection directe (10) avant l'actionnement de la touche d'appel direct (10),
- que la sélection directe est effectuée au moyen de la touche de sélection directe (10), et
- que l'information de disponibilité (14) est analysée de telle manière qu'on détermine à partir de la liste (13) une connexion de prédilection, par laquelle le deuxième abonné est joignable avec la plus grande probabilité lors de la sélection de la connexion (44).

2. Procédé selon la revendication 1,
**caractérisé en ce**
**que** s'affiche, après le déclenchement d'une fonction de sélection directe (10), la liste (13) des terminaux et des connexions, qui sont associés au deuxième abonné, et en ce que la connexion de prédilection est proposée au premier abonné.

3. Procédé selon la revendication 1 et 2,
**caractérisé en ce**
**qu'**une connexion avec une connexion sélectionnée parmi la liste (13) est établie, après l'analyse des informations de disponibilité (14).

4. Procédé selon l'une quelconque des revendications 2 ou 3,
**caractérisé en ce**
**que** la liste (13) et/ou les informations de disponibilité (14) sont rendues accessibles au premier abonné sur un écran (12) ou par sortie vocale (15) automatique.

5. Procédé selon l'une quelconque des revendications 2 à 4,
**caractérisé en ce**
**qu'**une sélection du deuxième abonné parmi la liste (13) est effectuée par le premier abonné par l'intermédiaire de touches (16), de la voix (17) ou d'une tonalité multifréquence.

6. Procédé selon l'une quelconque des revendications 1 à 4,
**caractérisé en ce**
**que** la sélection du deuxième abonné parmi la liste (13) est effectuée automatiquement par une application (23).

7. Procédé selon l'une quelconque des revendications 1 à 4,
**caractérisé en ce**
**que** la sélection du deuxième abonné parmi la liste (13) est effectuée automatiquement par un dispositif servant à sélectionner (8) de manière automatique une connexion dans un module (5), par l'intermédiaire duquel le premier terminal (1) est connecté à l'installation téléphonique (20a).

8. Procédé selon l'une quelconque des revendications 1 à 7,
**caractérisé en ce**
**que** la liste (13) à associer au deuxième abonné par une fonction de sélection directe (10) peut être paramétrée par le premier abonné ou par le deuxième abonné.

9. Procédé selon l'une quelconque des revendications 1 à 8,
**caractérisé en ce**
**que** la liste (13) à associer au deuxième abonné par la fonction de sélection directe (10) est extraite d'un répertoire (23) électronique.

10. Procédé selon l'une quelconque des revendications 1 à 9,
**caractérisé en ce**
**qu'**on utilise une connexion bon marché, une incidence du moment de la journée, un rejet de certaines connexions ou un procédé adaptatif, qui adapte son comportement sur la base du retour d'expérience aux connexions ouvertes avec succès jusqu'à présent.

11. Module (5) pour un premier terminal (1) d'un premier abonné dans une installation téléphonique (20a) comprenant un dispositif de déclenchement (10) pour un procédé de sélection directe selon l'une quelconque des revendications précédentes et comprenant une unité de délivrance (4) pour des informations de disponibilité (14),
sachant
- que le module (5) est connecté à une source d'informations (6, 23) pour une liste (13) des données de connexion associées à une sélection directe (10) pour le deuxième abonné et est configuré pour fournir lesdites données après un actionnement d'une touche de sélection directe (10) associée au deuxième abonné,
- que le module (5) est connecté à un service de disponibilité (24) en dehors de l'installation téléphonique (20a) afin d'appeler en permanence et de manière indépendante par l'actionnement de la touche de sélection directe (10) des informations de disponibilité (14) relatives à un deuxième abonné, et est relié à l'unité d'émission (4) du terminal (1) afin d'afficher en permanence lesdites informations de disponibilité (14) au moins en partie par l'intermédiaire de l'unité d'émission (4),
- que le procédé de sélection directe est exécuté au moyen de la touche de sélection directe (10) associée au deuxième abonné,
- que le module (5) présente une unité de classement (7) servant à classer les informations de disponibilité (14) pour savoir si le deuxième abonné est disponible ou non,
- que le module (5) est configuré pour afficher le résultat du classement par un affichage (11) binaire associé à la touche de sélection directe avant l'actionnement de la touche d'appel direct (10), et
- que le module (5) est connecté à un dispositif de sélection de connexion (8) automatique, lequel dispositif est configuré pour analyser les informations de disponibilité (14) de telle manière qu'il est possible de déterminer une connexion de prédilection parmi la liste (13), par l'intermédiaire de laquelle le deuxième abonné est joignable (44) avec la plus grande probabilité lors de la sélection de la connexion.

12. Module (5) selon la revendication 11,
**caractérisé en ce**
**que** le module (5) est mis au point pour afficher les données de connexion associées à la sélection directe (10) pour le deuxième abonné par l'intermédiaire de l'unité d'émission (4) et pour proposer au premier abonné la connexion de prédilection.

13. Module (5) selon la revendication 11 ou 12,
**caractérisé en ce**
**que** le module (5) est connecté au moins indirectement à un écran (12) ou à un haut-parleur (15) de l'unité d'émission (4) pour afficher des informations (13, 14) ou pour délivrer des informations par sortie vocale.

14. Module (5) selon l'une quelconque des revendications 11 à 13,
**caractérisé**
**par** une mémoire (6) pour la liste (13) des terminaux et des connexions d'au moins un éventuel deuxième abonné.

15. Module (5) selon l'une quelconque des revendications 11 à 14,
**caractérisé en ce**
**que** le module (5) est connecté à un répertoire (23) électronique, pour appeler la liste (13) des terminaux et des connexions du deuxième abonné.

16. Module (5) selon l'une quelconque des revendications 11 à 15,
**caractérisé en ce**
**que** le module (5) est connecté à un dispositif de sélection (3) pour la sélection de la connexion parmi la liste (13).

17. Module (5) selon la revendication 16,
**caractérisé en ce**
**que** le module (5) est connecté au moins indirectement à un clavier (16), un microphone (17) pour l'entrée vocale ou à un générateur de tonalités multifréquences (16, 17) du dispositif de sélection (3).

18. Module (5) selon l'une quelconque des revendications 11 à 17,
**caractérisé en ce**
**que** le module (5) est configuré pour tenter l'établissement d'une connexion à la connexion déterminée dans le dispositif servant à la sélection automatique de connexion (8).

19. Module (5) selon l'une quelconque des revendications 11 à 17,
**caractérisé en ce**
**que** le module (5) est configuré non pas pour sélectionner en toute autonomie la connexion de prédilection, mais pour proposer cette dernière au premier abonné.

20. Module (5) selon la revendication 19,
**caractérisé en ce**
**que** le dispositif servant à la sélection (8) automatique est intégré dans le module (5).
